# EUROPÄISCHE PATENTANMELDUNG

(11) **EP 1 816 433 A2**
(43) Veröffentlichungstag der Anmeldung: **08.08.2007**
(21) Anmeldenummer: 07101412.0
(22) Anmeldetag: 30.01.2007
(51) Int. Cl.: G01C 9/06, G01C 9/10

(54) **Vorrichtung zur Bestimmung einer Ausrichtung**

(30) Priorität: 06.02.2006 DE 102006005216
(71) Anmelder: ROBERT BOSCH GMBH, 70442 Stuttgart (DE)
(72) Erfinder: Krapf, Reiner, 72770, Reutlingen (DE); Schulte, Clemens, 70197, Stuttgart (DE); Lukas, Heiner, 70197, Stuttgart (DE); Adamczak, Wolfgang, 70597, Stuttgart (DE)

(57) **Zusammenfassung**

Die Erfindung geht aus von einer Vorrichtung zur Bestimmung einer Ausrichtung mit zumindest einer Referenzrichtung (16, 100) und einer Sensoreinheit (20, 56, 98), die ein erstes Sensormittel (30.1, 74.1, 104.1, 106.1) zur Erfassung einer Ausrichtungsinformation umfasst.

Es wird vorgeschlagen, dass die Sensoreinheit (20, 56, 98) zumindest ein zweites Sensormittel (30.2, 74.2, 76.1, 76.2, 104.2, 106.2) zur Erfassung wenigstens einer zweiten Ausrichtungsinformation aufweist und die Sensormittel (30.1, 30.2, 74.1, 74.2, 76.1, 76.2, 104.1, 104.2, 106.1, 106.2) zur gemeinsamen Bestimmung eines Ausrichtungszustands der Referenzrichtung (16, 100) vorgesehen sind.

## Beschreibung

### Stand der Technik

Die Erfindung geht aus von einer Vorrichtung zur Bestimmung einer Ausrichtung mit einer Sensoreinheit nach dem Oberbegriff des Anspruchs 1.

Es sind Vorrichtungen zur Bestimmung einer Ausrichtung bekannt, wie z.B. Nivelliervorrichtungen, welche mit Hilfe einer Referenzrichtung und eines mechanischen oder elektrischen Sensors zum Ausgeben eines Ausrichtungszustands der Referenzrichtung relativ zu einer Sollrichtung dienen.

### Vorteile der Erfindung

Die Erfindung geht aus von einer Vorrichtung zur Bestimmung einer Ausrichtung mit zumindest einer Referenzrichtung und einer Sensoreinheit, die ein erstes Sensormittel zur Erfassung einer Ausrichtungsinformation umfasst.

Es wird vorgeschlagen, dass die Sensoreinheit zumindest ein zweites Sensormittel zur Erfassung wenigstens einer zweiten Ausrichtungsinformation aufweist und die Sensormittel zur gemeinsamen Bestimmung eines Ausrichtungszustands der Referenzrichtung vorgesehen sind. Es kann dadurch eine hohe Genauigkeit der Vorrichtung einfach und mit hoher Flexibilität erzielt werden. Insbesondere kann eine gewünschte Genauigkeit einfach durch eine gezielte Anordnung der Sensormittel innerhalb der Sensoreinheit erreicht werden, wobei bestehende, einfache und kostengünstige Sensormittel hierzu eingesetzt werden können. Das Erreichen einer gewünschten Ausrichtung der Vorrichtung in einer Sollrichtung, z.B. einer horizontalen oder einer vertikalen Richtung, findet, innerhalb von Toleranz- und/oder Genauigkeitsgrenzen, vorzugsweise durch Übereinstimmen des Ausrichtungszustands der Referenzrichtung mit der Sollrichtung statt. Ist die Vorrichtung z.B. als Nivelliervorrichtung zum Anlegen an einen Untersuchungsgegenstand mit einer Anlagefläche ausgebildet, ist die Referenzrichtung beispielsweise durch eine Kante der Anlagefläche dargestellt.

Außerdem wird vorgeschlagen, dass die Vorrichtung ein Auswertemittel aufweist, das dazu vorgesehen ist, die Ausrichtungsinformationen in eine Ausrichtungszustandsinformation auszuwerten. Es kann dadurch ein aufwendiges Übermitteln der einzelnen Ausrichtungsinformationen zu einer weiteren Auswerteeinheit außerhalb der Vorrichtung vorteilhaft vermieden werden. Die Ausrichtungszustandsinformation stellt vorzugsweise eine Information dar, die z.B. zur Anzeige des Ausrichtungszustands der Referenzrichtung und/oder zum Steuern einer Ausrichteinheit dienen kann.

Ferner kann ein hoher Bedienkomfort der Vorrichtung erreicht werden, wenn diese eine Ausgabeeinheit aufweist, die dazu vorgesehen ist, einem Bediener den Ausrichtungszustand zu signalisieren.

In einer weiteren Ausführungsform der Erfindung wird vorgeschlagen, dass die Sensormittel jeweils eine Bezugsrichtung zur Erfassung der jeweiligen Ausrichtungsinformation aufweisen und die jeweiligen Bezugsrichtungen der Sensormittel einen Winkel bilden. Dadurch kann ein besonders einfacher und kostengünstiger Aufbau der Sensoreinheit erreicht werden. Insbesondere kann der Einsatz von kostenaufwendigen, hochwertigen Sensormitteln, beispielsweise Neigungssensoren, vermieden werden. Beispielsweise werden die Sensormittel jeweils von einer Tragebene getragen, wobei die Tragebenen miteinander den Winkel bilden. Die Bezugsrichtungen der einzelnen Sensormittel bilden zweckmäßigerweise jeweils einen Winkel mit der Referenzrichtung der Vorrichtung. Bevorzugt sind diese Winkel der Bezugsrichtungen jeweils zur Referenzrichtung für beide Sensormittel identisch gewählt. Bei der Bestimmung einer Ausrichtung der Vorrichtung relativ zu einer Sollrichtung ist vorzugsweise die Ausrichtungsinformation eines Sensormittels als Ausrichtungszustand der Bezugsrichtung des Sensormittels relativ zur Sollrichtung ausgeführt.

Ferner wird vorgeschlagen, dass die Vorrichtung zumindest einen Genauigkeitsbereich aufweist, in dem ein Übereinstimmen des Ausrichtungszustands der Referenzrichtung mit einer Sollrichtung innerhalb von Ausrichtungsgrenzen um die Sollrichtung ausgegeben wird. Dadurch kann die Vorrichtung vorteilhaft an Anwendungsbedingungen angepasst werden, in denen ein feines Übereinstimmen des Ausrichtungszustands der Referenzrichtung mit der Sollrichtung unangemessen oder schwer erreichbar oder im Gegenteil gewünscht oder von bedeutender Relevanz ist.

Ein gewünschter Genauigkeitsbereich kann besonders einfach durch einen entsprechenden Aufbau der Sensoreinheit, insbesondere durch die Anordnung der Sensormittel, erreicht werden, wenn der Genauigkeitsbereich vom Winkel abhängt, welcher von den jeweiligen Bezugsrichtungen der Sensormittel gebildet ist. Die Sensoreinheit kann derart aufgebaut sein, dass der Winkel unveränderlich ist. Es sind Vorrichtungen denkbar, bei welchen der Winkel von einem Bediener mechanisch und/oder elektrisch einstellbar ist. Der Genauigkeitsbereich kann dabei durch Wahl des Winkels flexibel von einem Bediener an Bedingungen einer Anwendung angepasst werden.

Weist die Vorrichtung zumindest zwei Genauigkeitsbereiche auf, die jeweils einem Paar von Ausrichtungsgrenzen zugeordnet sind, kann die Präzision einer Ausrichtungsbestimmung vorteilhaft erhöht werden. Vorzugsweise entspricht ein Genauigkeitsbereich einem groben Übereinstimmen des Ausrichtungszustands der Referenzrichtung mit einer Sollrichtung innerhalb von groben Ausrichtungsgrenzen, während der weitere Genauigkeitsbereich einem feinen Übereinstimmen des Ausrichtungszustands innerhalb von feinen, von den groben Ausrichtungsgrenzen umfassten Ausrichtungsgrenzen entspricht.

In einer vorteilhaften Weiterbildung der Erfindung wird vorgeschlagen, dass die Vorrichtung eine zweite Referenzrichtung aufweist, welche mit der ersten Referenzrichtung eine Referenzebene bildet, wobei die Sensoreinheit dazu vorgesehen ist, einen Ausrichtungszustand der Referenzebene zu bestimmen. Dadurch kann eine Funktionalität der Vorrichtung einfach erweitert werden. Dabei ist die Sensoreinheit vorteilhafterweise dazu vorgesehen, den Ausrichtungszustand einer der Referenzrichtungen relativ zu einer ersten Sollrichtung und den Ausrichtungszustand der weiteren Referenzrichtung relativ zu einer zweiten Sollrichtung gleichzeitig zu bestimmen, wobei die Sollrichtungen eine Sollebene bilden.

Es kann ein hoher Bedienkomfort erreicht werden, wenn die Vorrichtung eine Ausgabeeinheit aufweist, die dazu vorgesehen ist, einem Bediener ein Vorgehen zum Erreichen einer gewünschten Ausrichtung vorzuschlagen. Dies kann z.B. auf optische und/oder akustische Weise erfolgen.

Des Weiteren wird vorgeschlagen, dass die Vorrichtung eine Schnittstelle aufweist, die zur Ausgabe eines Ausrichtungssignals zum Steuern eines Ausrichtmittels vorgesehen ist. Dadurch kann bei einem Einsatz der Vorrichtung in Einheiten, deren Betrieb ein Ausrichtvorgehen voraussetzt, ein vorteilhaftes Automatisieren dieses Ausrichtvorgehens erzielt werden. Dabei kann das Ausrichtungssignal eine von einem Auswertemittel ausgewertete Ausrichtungszustandsinformation und/oder die von den Sensormitteln erfassten Ausrichtungsinformationen enthalten. Die Vorrichtung kann vorteilhaft als Regeleinheit zum Regeln einer Ausrichtgröße des Ausrichtmittels ausgebildet sein. Dadurch kann z.B. ein automatisches Aufrechterhalten einer gewünschten Ausrichtung erzielt werden. Dabei ist eine Ausrichtgröße vorzugsweise eine Größe des Ausrichtmittels, die zu einem Antrieb eines Ausrichtens durch das Ausrichtmittel dient, wie z.B. eine elektrische Spannung.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Nivelliervorrichtung mit einer Ausgabeeinheit zur Anzeige einer Ausrichtung,
- Fig. 2: eine Sensoreinheit der Nivelliervorrichtung aus Figur 1 mit einer Referenzrichtung,
- Fig. 3: die Sensoreinheit mit verschiedenen Ausrichtungen der Referenzrichtung,
- Fig. 4: eine weitere Nivelliervorrichtung mit einer Ausgabeeinheit zur Anzeige einer groben und einer feinen Ausrichtung,
- Fig. 5: eine Sensoreinheit der Nivelliervorrichtung aus Figur 4,
- Fig. 6: eine Anordnung von Sensormitteln der Sensoreinheit aus Figur 5,
- Fig. 7: eine Sensoreinheit einer weiteren Nivelliervorrichtung mit zwei Referenzrichtungen, welche eine Referenzebene bilden,
- Fig. 8: einen Projektor mit einer Leuchteinheit, in der eine Nivelliervorrichtung integriert ist.

### Beschreibung der Ausführungsbeispiele

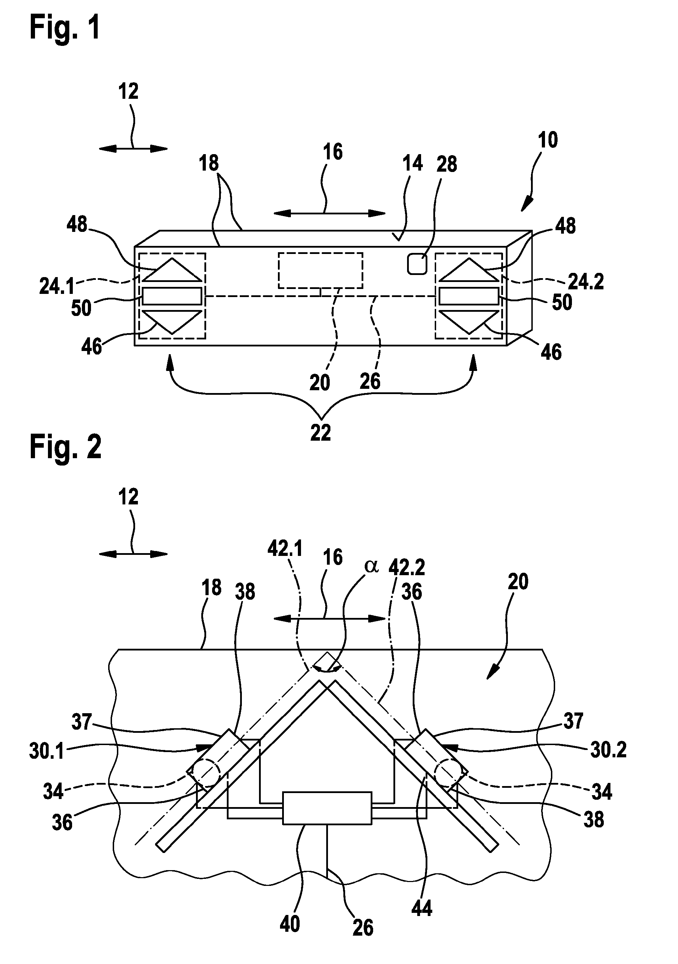

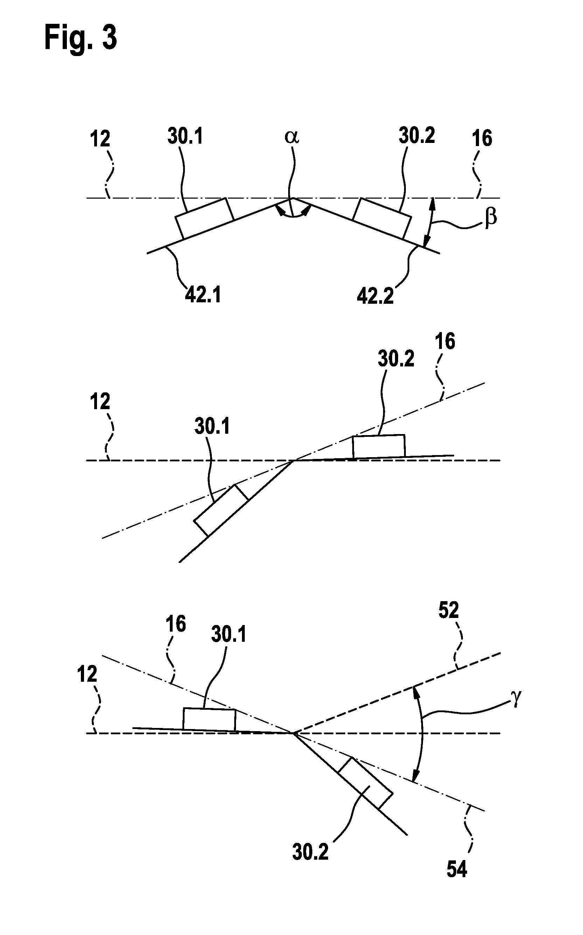

Figur 1 zeigt eine als Nivelliervorrichtung 10 ausgebildete Vorrichtung zur Bestimmung einer Ausrichtung. Zur Bestimmung einer Ausrichtung eines Gegenstands relativ zu einer vorgegebenen Sollrichtung 12 wird die Nivelliervorrichtung 10 mit einer Anlagefläche 14 an eine Kante oder an eine Fläche des Gegenstands angelegt. In diesem Ausführungsbeispiel ist die Sollrichtung 12 als eine horizontale, zur Richtung der Schwerkraft senkrechte Richtung ausgeführt und der Gegenstand ist z.B. als Regalboden ausgebildet, der horizontal ausgerichtet werden soll. Die Nivelliervorrichtung 10 weist eine Referenzrichtung 16 auf, die Kanten 18 der Anlagefläche 14 entspricht. Im angelegten Zustand entspricht dann der Ausrichtungszustand der Referenzrichtung 16 relativ zur Sollrichtung 12 der Ausrichtung des Gegenstands relativ zur Sollrichtung 12. Die Nivelliervorrichtung 10 mit einer der Kanten 18 kann ferner zum Markieren der Sollrichtung 12, z.B. an einer Wand, genutzt werden. Der Ausrichtungszustand der Referenzrichtung 16 wird durch eine in der Figur gestrichelt dargestellte Sensoreinheit 20 bestimmt. Mit Hilfe einer optischen Ausgabeeinheit 22, welche zwei Anzeigemittel 24.1, 24.2 aufweist, die mit der Sensoreinheit 20 über eine elektrische Leitung 26 verbunden sind, wird dieser Ausrichtungszustand einem Bediener signalisiert. Die Funktionsweise der Ausgabeeinheit 22 wird unten anhand der Figuren 2 und 3 näher beschrieben. Die Nivelliervorrichtung 10 weist außerdem ein Betätigungselement 28 zum Ein- und Ausschalten eines Betriebs auf.

In Figur 2 ist die Sensoreinheit 20 der Nivelliervorrichtung 10 in einer Detailansicht dargestellt. Diese umfasst zwei Sensormittel 30.1, 30.2. In diesen Sensormitteln 30.1, 30.2 ist jeweils ein als leitfähige Kugel ausgebildeter beweglicher Körper 34 angeordnet. Dieser Körper 34 kann sich, von der Schwerkraft angetrieben, von einer ersten Wand 36 zu einer zweiten Wand 38 des Sensormittels 30.1 bzw. 30.2 bewegen, wobei die Wände 36, 38 als leitfähige Elemente ausgeführt sind. Die Sensormittel 30.1, 30.2 weisen jeweils einen zylinderförmigen Seitenabschnitt 37 auf, der ebenfalls elektrisch leitend und von den Wänden 36, 38 isoliert ist. Im Betrieb wird eine elektrische Spannung zwischen den Wänden 36, 38, die beide z.B. einen positiven Pol darstellen, und dem Seitenabschnitt 37, der z.B. einen negativen Pol darstellt, angelegt. Wenn einer der Körper 34 an einer der Wände 36 oder 38 anliegt, fließt ein Strom über diesen Körper 34 zwischen der Wand 36 bzw. 38 und dem Seitenabschnitt 37. Dadurch kann die Anordnung des Körpers 34 an der ersten oder an der zweiten Wand 36 bzw. 38 erfasst werden. Dies wird von einem Auswertemittel 40 registriert, welches mit den Sensormitteln 30.1, 30.2, und zwar jeweils mit den Wänden 36, 38 und dem Seitenabschnitt 37, elektrisch verbunden ist. Ferner weisen die Sensormittel 30.1, 30.2 jeweils eine Bezugsrichtung 42.1 bzw. 42.2 auf, die der jeweiligen Bewegungsrichtung des beweglichen Körpers 34 entspricht. Die jeweilige Ausrichtung der Bezugsrichtungen 42.1 bzw. 42.2 relativ zur Sollrichtung 12 bildet eine Ausrichtungsinformation, die vom entsprechenden Sensormittel 30.1 bzw. 30.2 über ein Sensieren der jeweiligen Anordnung des Körpers 34 erfasst wird. Die Bezugsrichtungen 42.1, 42.2 bilden einen Winkel α. Hierzu sind die Sensormittel 30.1, 30.2 an einem Tragelement 44 befestigt, welches in Form einer Winkelbrücke ausgelegt ist. Die Befestigung der Sensormittel 30.1, 30.2 kann durch ein Schrauben, ein Schweißen, ein Nieten, ein Klemmen, ein Kleben und/oder ein Stecken usw. erfolgen.

Mit einer gemeinsamen Erfassung der Ausrichtungsinformationen durch die Sensormittel 30.1, 30.2 kann der Ausrichtungszustand der Referenzrichtung 16 einfach bestimmt werden: eine Anordnung von beiden beweglichen Körpern 34 an den ersten Wänden 36 entspricht einer Abweichung der Referenzrichtung 16 zur Sollrichtung 12 entgegen des Uhrzeigersinns. Beim Übereinstimmen der Referenzrichtung 16 mit der Sollrichtung 12 ist der bewegliche Körper 34 des Sensormittels 30.1 an der ersten Wand 36 angeordnet, während der andere Körper 34 an der zweiten Wand 38 des Sensormittels 30.2 anliegt usw. Anhand der Ausrichtungsinformationen wird eine Ausrichtungszustandsinformation, wie z.B. "zu tief nach links", "übereinstimmend", "zu tief nach rechts", vom Auswertemittel 40 ausgewertet. Das Auswertemittel 40 überträgt dann diese Ausrichtungszustandsinformation in Form eines elektrischen Signals über die Leitung 26 an die Anzeigemittel 24.1, 24.2 der optischen Ausgabeeinheit 22. Diese Anzeigemittel 24.1, 24.2 weisen jeweils drei lichtdurchlässige Anzeigeelemente 46, 48, 50 auf, die in Form von dreieckigen Pfeilen bzw. eines Rechtecks ausgebildet sind. Die als dreieckige Pfeile ausgeformten Anzeigeelemente 46, 48 sind jeweils senkrecht zur Referenzrichtung 16 und in entgegengesetzter Richtung zueinander gerichtet. Abhängig vom Ausrichtungszustand der Referenzrichtung 16 relativ zur Sollrichtung 12 werden die Anzeigeelemente 46, 48, 50 derart beleuchtet, dass einem Bediener ein Vorgehen ("nach links" bzw. "nach rechts drehen") zum Erreichen der Übereinstimmung des Ausrichtungszustands der Referenzrichtung 16 mit der Sollrichtung 12 oder ein Übereinstimmen angezeigt wird.

In einer weiteren Ausführungsform ist denkbar, dass die Ausgabeeinheit 22 alternativ oder zusätzlich zur Ausgabe eines akustischen Signals vorgesehen ist. Beispielsweise kann ein Ton ausgegeben werden, wenn eine gewünschte Ausrichtung erreicht ist. Des Weiteren ist der Einsatz von alternativen Sensormitteln zum Erfassen der Ausrichtungsinformationen denkbar. Es können z.B. Sensoren eingesetzt werden, die über die Bewegung eines dem beweglichen Körper 34 ähnlichen oder alternativen beweglichen Körpers, wie z.B. über die Bewegung eines Pendels, eine Kapazitätsänderung und/oder eine Konduktivitätsänderung erfassen. Die Sensormittel 30.1, 30.2 können auch als mikromechanische Siliziumstrukturen (MEMS oder Micro-Electro-Mechanical System) ausgeführt sein. Außerdem sind weitere Sensoren denkbar, die einen Elektrolyten enthalten und die Ausrichtungsinformationen konduktometrisch oder kapazitiv erfassen. Des Weiteren können die Sensormittel 30.1, 30.2 als Hall-Sensoren ausgebildet sein, die sich am Erdmagnetfeld oder am Magnetfeld eines beweglichen Dauermagnets orientieren. Ferner ist der Einsatz von Libellen denkbar, die von optoelektronischen Bauelementen ausgelesen werden.

In Figur 3 ist das Prinzip der gemeinsamen Bestimmung des Ausrichtungszustands der Referenzrichtung 16 relativ zur Sollrichtung 12 durch die Sensormittel 30.1, 30.2 in drei schematischen Skizzen dargestellt. In der ersten Skizze ist die Anordnung der Sensormittel 30.1, 30.2 gezeigt, wobei die Referenzrichtung 16 mit der Sollrichtung 12 übereinstimmt. Bei der Ausgabeeinheit 22 werden die Anzeigeelemente 50 beleuchtet. Die Bezugsrichtungen 42.1, 42.2 der Sensormittel 30.1 bzw. 30.2 bilden jeweils einen Winkel β mit der Referenzrichtung 16. Dieser Winkel β beträgt (π - α) / 2. In der zweiten Skizze wurde die Nivelliervorrichtung 10 um den Winkel β entgegen des Uhrzeigersinns gedreht. Die vom Sensormittel 30.2 ausgegebene Ausrichtungsinformation hat sich im Vergleich zur ersten Skizze geändert, was vom Auswertemittel 40 registriert und in eine entsprechende Ausrichtungszustandsinformation ausgewertet wird. Bei der Ausgabeeinheit 22 werden das Anzeigeelement 48 des Anzeigemittels 24.1 und das Anzeigeelement 46 des Anzeigemittels 24.2 beleuchtet. In der dritten Skizze wird die Nivelliervorrichtung 10 um den Winkel β im Uhrzeigersinn gedreht, wobei das Anzeigen der Ausgabeeinheit 22 dementsprechend angepasst wird. In der dritten Skizze ist ferner die Position der Referenzrichtung 16 der zweiten Skizze dargestellt. Diese Position und die tatsächliche Position der Referenzrichtung 16 bilden Ausrichtungsgrenzen 52, 54 eines Genauigkeitsbereichs γ, innerhalb dessen die Ausrichtungsinformationen der Sensormittel 30.1, 30.2 im Vergleich zur Orientierung der ersten Skizze unverändert bleiben. Dementsprechend wird in diesem Genauigkeitsbereich γ ein Übereinstimmen des Ausrichtungszustands der Referenzrichtung 16 mit der Sollrichtung 12 durch die Ausgabeeinheit 22, wie bei der ersten Skizze beschrieben, angezeigt. Dieser Genauigkeitsbereich γ hängt vom Winkel α ab, und zwar beträgt er π - α. Je größer der Winkel α ist, desto kleiner ist dieser Genauigkeitsbereich γ.

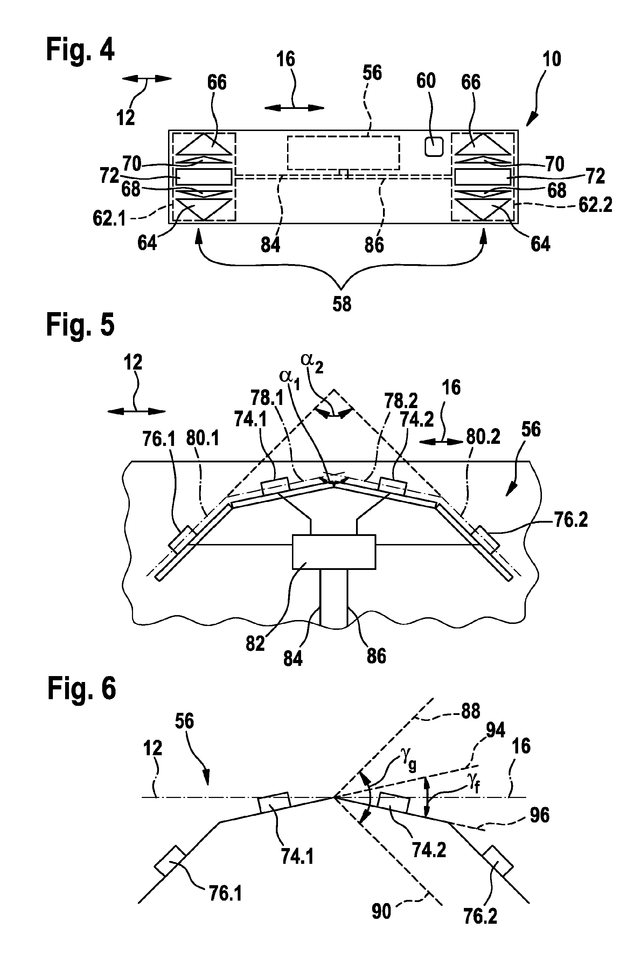

Figur 4 zeigt eine alternative Ausführungsform der Nivelliervorrichtung 10. Diese weist eine Sensoreinheit 56, eine Ausgabeeinheit 58 und ein Betätigungselement 60 auf. Die Ausgabeeinheit 58 weist zwei Anzeigemittel 62.1, 62.2 auf, welche jeweils mit fünf als lichtdurchlässige Elemente ausgebildeten Anzeigeelementen 64, 66, 68, 70, 72 versehen sind.

In Figur 5 ist die Sensoreinheit 56 in einer Detailansicht zu sehen. Diese weist ein erstes, zentral angeordnetes Paar von Sensormitteln 74.1, 74.2 und ein zweites Paar von Sensormitteln 76.1, 76.2 auf, welche beidseitig des ersten Paars angeordnet sind. Die Sensormittel 74.1, 74.2 weisen jeweils eine Bezugsrichtung 78.1 bzw. 78.2 auf und die Sensormittel 76.1, 76.2 weisen jeweils eine Bezugsrichtung 80.1 bzw. 80.2 auf. Die Bezugsrichtungen 78.1, 78.2 bilden einen Winkel α₁, während die Bezugsrichtungen 80.1, 80.2 einen Winkel α₂ bilden. Im Betrieb erfassen die Sensormittel 74.1, 74.2, 76.1, 76.2 jeweils eine Ausrichtungsinformation, die als Ausrichtung der jeweiligen Bezugsrichtung relativ zur Sollrichtung 12 ausgebildet ist. Die Ausrichtungsinformationen werden von einem Auswertemittel 82 registriert und in eine Ausrichtungszustandsinformation ausgewertet. Das Auswertemittel 82 ist mit den Sensormitteln 74.1, 74.2, 76.1, 76.2 einerseits und mit der Ausgabeeinheit 58 über zwei Leitungen 84, 86 anderseits elektrisch verbunden. Dem Paar von Sensormitteln 74.1, 74.2 sind die Anzeigeelemente 68, 70, 72 der Ausgabeeinheit 58 mittels der Leitung 84 zugeordnet, während dem Paar von Sensormitteln 76.1, 76.2 die Anzeigeelemente 64, 66 mittels der Leitung 86 zugeordnet sind. Die Funktionsweise eines Paars von Sensormitteln bei einer Bestimmung des Ausrichtungszustands der Referenzrichtung 16 kann der obigen Beschreibung der Sensormittel 30.1, 30.2 entnommen werden. Durch die Paare von Sensormitteln 74.1, 74.2 bzw. 76.1, 76.2 kann eine grobe bzw. feine Bestimmung des Ausrichtungszustands der Referenzrichtung 16 erreicht werden.

In Figur 6 ist das Prinzip der groben und feinen Bestimmung anhand einer schematischen Skizze beschrieben. Die Sensoreinheit 56 ist in einer Lage dargestellt, bei welcher die Referenzrichtung 16 der Sollrichtung 12 entspricht. Die Referenzrichtung 16 ist ferner in verschiedenen Positionen gestrichelt dargestellt, die jeweils einer verschiedenen Orientierung der Nivelliervorrichtung 10 entsprechen. Zwei Positionen bilden Ausrichtungsgrenzen 88, 90 eines groben Genauigkeitsbereichs γ_{g}, innerhalb dessen die Ausrichtungsinformationen des Paars von Sensormitteln 76.1, 76.2, ausgehend von der in der Skizze dargestellten Orientierung, unverändert bleiben. Wird z.B. die Ausrichtungsgrenze 88 entgegen des Uhrzeigersinns überschritten, ändert sich dann die Ausrichtungsinformation des Sensormittels 76.2. Zwei weitere Positionen bilden Ausrichtungsgrenzen 94, 96 eines feinen Genauigkeitsbereichs γ_{f}, innerhalb dessen die Ausrichtungsinformationen des Paars von Sensormitteln 74.1, 74.2, ausgehend von der dargestellten Orientierung, unverändert bleiben. Befindet sich die Referenzrichtung 16 im feinen Genauigkeitsbereich γ_{f}, so leuchten die Anzeigeelemente 72 der Ausgabeeinheit 58 auf. Wird die Ausrichtungsgrenze 96 im Uhrzeigersinn überschritten, leuchten das Anzeigeelement 68 des Anzeigemittels 62.1 und das Anzeigeelement 70 des Anzeigemittels 62.2 auf, die somit eine feine Abweichung des Ausrichtungszustands der Referenzrichtung 16 von der Sollrichtung 12 signalisieren und ein Vorgehen dementsprechend vorschlagen. Wird die Ausrichtungsgrenze 90 im Uhrzeigersinn überschritten, leuchten das Anzeigeelement 64 des Anzeigemittels 62.1 und das Anzeigeelement 66 des Anzeigemittels 62.2 auf, die dann eine grobe Abweichung signalisieren und ein entsprechendes Vorgehen vorschlagen. Die Genauigkeitsbereiche γ_{f} und γ_{g} hängen vom Winkel α₁ bzw. α₂ ab.

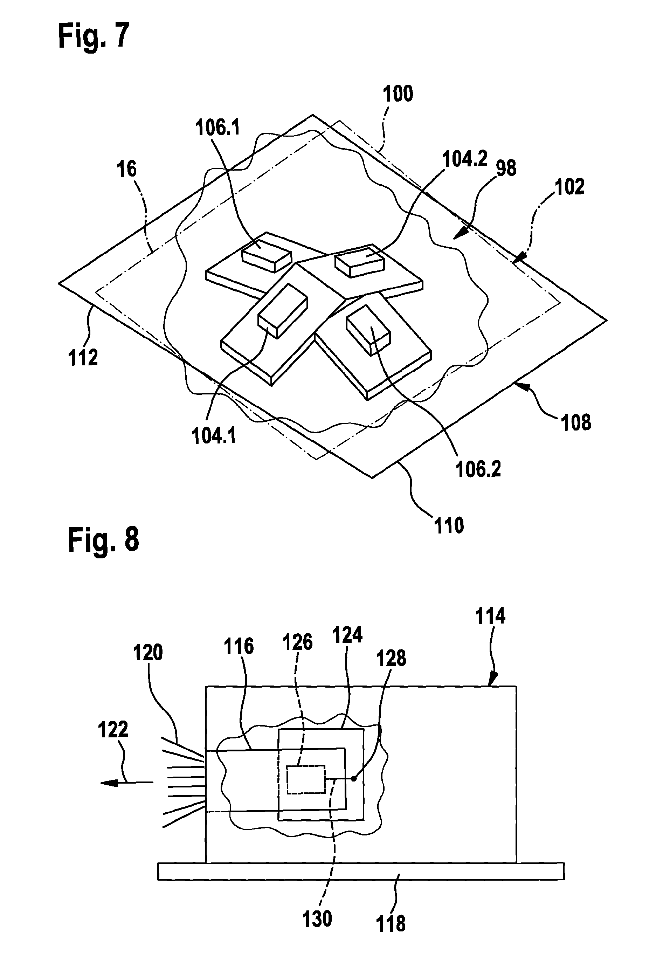

In Figur 7 ist eine weitere Ausführungsform einer Sensoreinheit 98 der Nivelliervorrichtung 10 dargestellt. Die Nivelliervorrichtung 10 weist eine zweite Referenzrichtung 100 auf, die mit der Referenzrichtung 16 eine Referenzebene 102 bildet. Einer Referenzrichtung 16, 100 ist jeweils ein Paar von Sensormitteln 104.1, 104.2 bzw. 106.1, 106.2 zugeordnet. Der Aufbau und die Funktionsweise der Paare von Sensormitteln 104.1, 104.2, 106.1, 106.2 kann der obigen Beschreibung der Sensormittel 30.1, 30.2 entnommen werden. Durch die Sensoreinheit 98 kann ein Ausrichtungszustand der Referenzebene 102 relativ zu einer Sollebene 108, die in diesem Beispiel eine horizontale Ebene ist, bestimmt werden. Hierzu erfassen die Sensormittel 104.1, 104.2, 106.1, 106.2, die jeweils eine der Übersichtlichkeit halber nicht gezeigte Bezugsrichtung aufweisen, eine Ausrichtungsinformation. Diese ist jeweils von der Ausrichtung der jeweiligen Bezugsrichtung zu einer Sollrichtung 110, 112 der Sollebene 108 gebildet. Diese Ausrichtungsinformationen können durch ein nicht gezeigtes Auswertemittel in eine Ausrichtungszustandsinformation über den Ausrichtungszustand der Referenzebene 102 relativ zur Sollebene 108 ausgewertet werden, welche durch eine nicht dargestellte Ausgabeeinheit angezeigt werden kann.

In Figur 8 ist ein Projektor 114 mit einer Leuchteinheit 116, z.B. einer Lasereinheit, dargestellt. Der Projektor 114, welcher auf einem schrägen Tragelement 118 angeordnet ist, sollte in einem Betrieb einen Lichtstrahl 120 in einer Sollrichtung 122, hier einer horizontalen Richtung, senden. Zum Erreichen der gewünschten Ausrichtung der Leuchteinheit 116 ist der Projektor 114 mit einem Ausrichtmittel 124 und einer in der Leuchteinheit 116 integrierten Nivelliervorrichtung 126 versehen. Diese Nivelliervorrichtung 126 umfasst die Sensoreinheit 20 aus Figur 2, eine Schnittstelle 128 zum Anschluss an das Ausrichtmittel 124 und eine elektrische Leitung 130. Vor einem Betrieb der Leuchteinheit 116 wird die Ausrichtung der Leuchteinheit 116 relativ zur Sollrichtung 122 bestimmt. Dies erfolgt - wie oben beschrieben - durch Erfassung der Ausrichtungsinformationen durch die Sensormittel 30.1, 30.2 (Figur 2). Die Ausrichtungsinformationen werden zum nicht gezeigten Auswertemittel 40 gegeben, welches anhand der Ausrichtungsinformationen ein Ausrichtungssignal über die elektrische Leitung 130 und die Schnittstelle 128 zum Ausrichtmittel 124 überträgt. Anhand dieses Ausrichtungssignals wird ein nicht gezeigter Motor des Ausrichtmittels 124 angetrieben, welcher die Leuchteinheit 116 derart bewegt, dass die Abweichung zur Sollrichtung 122 reduziert wird. Während dieses Antriebs wird die Ausrichtung der Leuchteinheit 116 durch die Nivelliervorrichtung 126 wiederholt bestimmt. Das Ausrichtungssignal stellt dabei ein Steuersignal zum Steuern des Ausrichtmittels 124 dar. Wenn die Abweichung zur Sollrichtung 122 vorgesetzte Genauigkeitsgrenzen unterschreitet, wird der Antrieb des Motors des Ausrichtmittels 124 gehalten, wobei ein Betrieb der Leuchteinheit 116 gestartet werden kann.

## Patentansprüche

1. Vorrichtung zur Bestimmung einer Ausrichtung mit zumindest einer Referenzrichtung (16, 100) und einer Sensoreinheit (20, 56, 98), die ein erstes Sensormittel (30.1, 74.1, 104.1, 106.1) zur Erfassung einer Ausrichtungsinformation umfasst, **dadurch gekennzeichnet, dass** die Sensoreinheit (20, 56, 98) zumindest ein zweites Sensormittel (30.2, 74.2, 76.1, 76.2, 104.2, 106.2) zur Erfassung wenigstens einer zweiten Ausrichtungsinformation aufweist und die Sensormittel (30.1, 30.2, 74.1, 74.2, 76.1, 76.2, 104.1, 104.2, 106.1, 106.2) zur gemeinsamen Bestimmung eines Ausrichtungszustands der Referenzrichtung (16, 100) vorgesehen sind.

2. Vorrichtung nach Anspruch 1, **gekennzeichnet durch** ein Auswertemittel (40, 82), das dazu vorgesehen ist, die Ausrichtungsinformationen in eine Ausrichtungszustandsinformation auszuwerten.

3. Vorrichtung nach Anspruch 1 oder 2, **gekennzeichnet durch** eine Ausgabeeinheit (22, 58), die dazu vorgesehen ist, einem Bediener den Ausrichtungszustand zu signalisieren.

4. Vorrichtung nach einem der vorhergehenden Ansprüche, **dadurch gekennzeichnet, dass** die Sensormittel (30.1, 30.2, 74.1, 74.2, 76.1, 76.2) jeweils eine Bezugsrichtung (42.1, 42.2, 78.1, 78.2, 80.1, 80.2) zur Erfassung der jeweiligen Ausrichtungsinformation aufweisen und die jeweiligen Bezugsrichtungen (42.1, 42.2, 78.1, 78.2, 80.1, 80.2) der Sensormittel (30.1, 30.2, 74.1, 74.2, 76.1, 76.2) einen Winkel (α, α₁, α₂) bilden.

5. Vorrichtung nach einem der vorhergehenden Ansprüche, **gekennzeichnet durch** zumindest einen Genauigkeitsbereich (γ, γ_{g}, γ_{f}), in dem ein Übereinstimmen des Ausrichtungszustands der Referenzrichtung (16) mit einer Sollrichtung (12) innerhalb von Ausrichtungsgrenzen (52, 54, 88, 90, 94, 96) um die Sollrichtung (12) ausgegeben wird.

6. Vorrichtung nach Anspruch 4 und 5, **dadurch gekennzeichnet, dass** der Genauigkeitsbereich (γ, γ_{g}, γ_{f}) vom Winkel (α, α₁, α₂) abhängt.

7. Vorrichtung nach Anspruch 5 oder 6, **gekennzeichnet durch** zumindest zwei Genauigkeitsbereiche (γ_{g}, γ_{f}), die jeweils einem Paar von Ausrichtungsgrenzen (88, 90, 94, 96) zugeordnet sind.

8. Vorrichtung nach einem der vorhergehenden Ansprüche, **gekennzeichnet durch** eine zweite Referenzrichtung (100), welche mit der ersten Referenzrichtung (16) eine Referenzebene (102) bildet, wobei die Sensoreinheit (98) dazu vorgesehen ist, einen Ausrichtungszustand der Referenzebene (102) zu bestimmen.

9. Vorrichtung nach einem der vorhergehenden Ansprüche, **gekennzeichnet durch** eine Ausgabeeinheit (22, 58), die dazu vorgesehen ist, einem Bediener ein Vorgehen zum Erreichen einer gewünschten Ausrichtung vorzuschlagen.

10. Vorrichtung nach einem der vorhergehenden Ansprüche, **gekennzeichnet durch** eine Schnittstelle (128), die zur Ausgabe eines Ausrichtungssignals zum Steuern eines Ausrichtmittels (124) vorgesehen ist.
